Europäisches Patentamt

European Patent Office

Office européen des brevets

(11) Veröffentlichungsnummer: **0 424 909 A2**

## (12) EUROPÄISCHE PATENTANMELDUNG

(21) Anmeldenummer: 90120407.3

(22) Anmeldetag: 24.10.90

(51) Int. Cl.⁵: **B27N 3/10**, E06B 3/78, B44C 5/04, B27N 7/00

(30) Priorität: 24.10.89 DE 3935421

(43) Veröffentlichungstag der Anmeldung:
02.05.91 Patentblatt 91/18

(84) Benannte Vertragsstaaten:
AT BE CH DE DK ES FR GB GR IT LI LU NL SE

(71) Anmelder: **Bison-Werke Bähre & Greten GmbH & Co. KG**

**W-3257 Springe 1(DE)**

(72) Erfinder: **Greten, Berndt, Dipl.-Ing.**
**Bussestrasse 10**
**W-3257 Springe 1(DE)**
Erfinder: **Seeger, Günter**
**Wolfstalstrasse 7**
**W-3257 Springe 1(DE)**
Erfinder: **Heller, Wolfgang, Dipl.-Holzwirt**
**Bismarckstrasse 9**
**W-3250 Hameln 1(DE)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heyn**
**B.Sc.(Phys.) Morgan**
**Robert-Koch-Strasse 1**
**W-8000 München 22(DE)**

(54) Verfahren zum Herstellen von Formteilen.

㊼ Es wird ein Verfahren zur Herstellung von Formteilen aus lignozellulose- und/oder zellulosehaltigen Teilchen beschrieben, wobei diese Teilchen zumindest überwiegend zerfaserte Teilchen sind und das aus den Teilchen gebildete Vlies durch Anwendung von Druck und Wärme in eine mechanisch stabile Plattenform gebracht und aus solch mechanisch stabilen und zumindest im wesentlichen Platten kontinuierlich und / oder diskontinuierlich in einem weiteren beheizten Preßvorgang unter Anwendung eines vergleichsweise wesentlich höheren Druckes das gewünschte, insbesondere dreidimensionale Endprodukt hergestellt wird.

EP 0 424 909 A2

## VERFAHREN ZUM HERSTELLEN VON FORMTEILEN

Die Erfindung betrifft ein Verfahren zum Herstellen von Formteilen aus mit wärmehärtbarem Bindemittel versetzten, lignozellulose- und / oder zellulosehaltigen Teilchen, bei dem zunächst auf einer Unterlage ein Vlies gebildet, dieses Vlies durch Druck und Wärme in Plattenform gebracht und dann durch einen weiteren unter Druck und Wärme vor sich gehenden Preßvorgang in die stabile Endform überführt wird.

Aus der DE-PS 27 29 687 ist ein Verfahren bekannt, das zum Herstellen von Formwerkstückrohlingen für Sitzschalen, Verformungen aufweisenden Abdeckplatten und dergleichen dient, wobei diese Rohlinge aus mit thermoplastischen Bindemitteln versetzten, lignozellulosehaltigen, zu einem Vlies zusammengesetzten Teilchen, insbesondere Spänen, mit einem Feuchtigkeitsgehalt, der kleiner ist als 9 %, bezogen auf atro, durch druckloses Aufheizen und Pressen unter Druck und Wärme mit Entdampfung der Feuchtigkeit gefertigt werden. Die Entdampfung der Feuchtigkeit wird hierbei vor dem Preßvorgang während des drucklosen Aufheizens in einer Zeit vorgenommen, die mindestens etwa das Zwei- bis Vierfache der Preßzeit beträgt, also größer ist als die zur Herstellung von Spanplatten erforderliche Preßzeit.

Dieses Verfahren ist zwar bei Verwendung von thermoplastischen Bindemitteln anwendbar, ergibt jedoch nur nachverformbare Formwerkstückrohlinge, wobei der gesamte Preßvorgang vor dem Nachverformen der Formwerkstückrohlinge eine längere Zeit in Anspruch nimmt als der Preßvorgang bei der Herstellung von Spanplatten.

Aus der US-PS 4 812 188 ist ein Verfahren zur Herstellung von Türen, Möbeltüren oder Paneelelementen bekannt, bei dem zunächst eine nur leicht vorgepreßte Platte aus Holzfasern oder Holzspänen unter Verwendung eines nur teilweise aktivierten, wärmehärtenden Bindemittels hergestellt und diese Platte mit Papier oder Furnier beschichtet wird. Dabei wird auch das Bindemittel zwischen Platte und Papier bzw. Furnier nur teilweise aktiviert, so daß das Gebilde aus dieser fürnierten oder mit Papier belegten Platte eine lederartige, entsprechend flexible Struktur besitzt. Dieses eine lederartige Konsistenz besitzende Vorprodukt wird während eines nachfolgenden Preß- und Heizvorganges in einer entsprechenden Formpresse unter gleichzeitiger Verdichtung dieses Vorprodukts und unter Aushärtung des Bindemittels in die Endform gebracht. Dabei kann dann die als Türe, Möbeltüre oder Paneelelement verwendbare Platte in ihrer Oberfläche reliefartig verformt sein.

Aufgabe der Erfindung ist es, das eingangs angegebene Verfahren derart aus- und weiterzubilden, daß auf besonders wirtschaftliche Weise eine bei Bedarf erfolgende Überführung von mechanisch bereits stabilen und zum Beispiel als Schrankrückwände, Türplatten oder Teile von Fußboden- und Dachelementen im Fertighausbau einsetzbaren Platten in insbesondere dreidimensionale Formteile erfolgen kann.

Gelöst wird diese Aufgabe nach der Erfindung im wesentlichen dadurch, daß als lignozellulose- und / -oder zellulosehaltige Teilchen zumindest überwiegend zerfaserte Teilchen, die auch kurz und wollig sein können, verwendet werden, daß das Vlies durch Anwendung von Druck und Wärme kontinuierlich und / oder diskontinuierlich in eine in sich mechanisch stabile Plattenform gebracht wird, und daß die bereits mechanisch stabile und zumindest im wesentlichen ausgehärtete Platte kontinuierlich und/oder diskontinuierlich in einem weiteren beheizten Preßvorgang unter Anwendung eines vergleichsweise wesentlich höheren Druckes in die gewünschte, insbesondere dreidimensionale Endform verpreßt wird.

Durch das Zusammenspiel dieser Maßnahmen lassen sich auf äußerst überraschende Weise Formteile hoher Qualität und Stabilität herstellen, wobei unter wirtschaftlichen Aspekten von besonderer Bedeutung ist, daß als Ausgangsmaterial für den Formpreßvorgang praktisch bereits fertige und somit sowohl zwischenspeicherbare als auch für andere Zwecke verwendbare Platten benutzt werden können.

Besonders vorteilhafte Ausgestaltungen des Verfahrens nach der Erfindung sind in den Unteransprüchen angegeben.

Die bei dem Formpreßvorgang angewandten und für die im Vergleich zur normalen Plattenfertigung ungewöhnlich hohen Temperaturen und Drücke ermöglichen eine in Verbindung mit der gemäß der Erfindung gewählten Zusammensetzung der Vliesbestandteile eine hinsichtlich der Oberflächengüte, der mechanischen Stabilität und vor allem der Vielseitigkeit möglicher Formgebungen in jeder Hinsicht unerwartete Formteilfertigung aus praktisch bereits fertigen und nicht nur Zwischenprodukte bzw. Rohlinge darstellenden Platten.

Im folgenden wird das erfindungsgemäße Verfahrensprinzip anhand eines Ausführungsbeispiels noch näher erläutert.

Ausgegangen wird von Holzhackschnitzeln, die in einem Refiner zu Faserstoffteilchen aufgeschlossen, danach auf einen Feuchtegehalt von 8 bis 12 % getrocknet und während des Trocknungsvorganges mit etwa 9 % an mit Paraffin versetztem Harnstoffharz - bezogen auf absolut trockene FaseTstoffteilchen - vermischt werden.

Anschließend erfolgt die Bildung eines Vlieses einer entsprechenden Dicke bzw. Höhe, das nacheinanderfolgend in einen Vorverdichter, eine HF-Erwärmungsstation und in den Preßspalt einer nach dem vielfach bewährten Kalanderprinzip arbeitenden Presse - erster Preßvorgang - gelangt. Bezüglich der Maschinentechnik ist dabei zu verweisen auf "Holz als Roh- und Werkstoff", Januar 1977, Heft 1, Rückseite des Titelblattes.

Nach einer bestimmten Zeit verläßt das Vlies den Preßspalt dieser Presse als mechanisch stabiler und ausgehärteter Plattenstrang mit einem Feuchtegehalt von 6 bis 8 % und wird ohne thermische Nachbehandlung in Plattenformate beliebiger Länge aufgeteilt. Eine dabei verwendbare Technologie ist beispielsweise beschrieben in der DD-PS 250 290.

Die Rohdichte der erhaltenen Platten von beispielsweise einer Dicke von 4 mm beträgt dabei 620 kg/m$^3$.

Schließlich lassen sich diese Platten unter den beanspruchten Bedingungen vor und während des zweiten Preßvorganges - für das Vorwärmen und Pressen ist eine Gesamtzeit von etwa ein bis zwei Minuten ausreichend - zu inbesondere dreidimensionalen Formteilen einer Dicke von 2,2 mm und einer Rohdichte von circa 1100 kg/m$^3$ pressen.

Von besonderem Vorteil ist es, entweder das Vlies oder das aus dem Vlies unter Druck und Wärme erhaltene Produkt noch vor dem weiteren Preßvorgang, bei dem das bereits preßgeformte Produkt in eine fertigpreßverformte Endform gebracht wird, ein- oder beidseitig mit wenigstens einer Beschichtungsbahn zu versehen. Durch diese Vorgehensweise können in Abhängigkeit von der jeweils verwendeten Art von Beschichtungsbahnen alle gegebenen Anforderungen und auch höchste Anforderungen erfüllt werden, da auf diese Weise hochdekorative, glatte und geschlossene Oberflächen in den verschiedensten Farben und Designs erhalten werden und auch speziellen Anforderungen an die Produktqualität, zum Beispiel Unempfindlichkeit gegen Feuchtigkeit, in vollem Umfange Rechnung getragen werden kann.

Im Rahmen der Erfindung ist von Bedeutung, daß auch die zunächst erhaltene mechanisch stabile, ebene, preßgeformte Platte, zu deren Herstellung lignozellulose- und / oder zellulosehaltige Teilchen in zerfaserter Form, die auch kurz und wollig sein können, verwendet werden, in Plattenform zum Beispiel als Schrankrückwand, Türplatte oder als Teil von Fußboden- und Dachelementen im Fertighausbau verwendet werden kann. Derartige Platten können vorzugsweise eine Dicke von etwa 2 bis 12 mm besitzen, und in diesen Platten ist das Bindemittel praktisch bereits vollständig ausgehärtet.

Die Besonderheit der Erfindung besteht nun darin, daß aus diesen preßgeformten Platten bei Bedarf fertigpreßverformte Elemente bzw. Formteile hergestellt werden können, das heißt daß die bereits mechanisch stabile und praktisch ausgehärtete Platte kontinuierlich und / oder diskontinuierlich in einem weiteren beheizten Preßvorgang unter Anwendung eines vergleichsweise wesentlich höheren Druckes zu einem fertigformverpreßten, dreidimensionale Verformungen aufweisenden Formteil überführt wird.

## Ansprüche

1. Verfahren zum Herstellen von Formteilen aus mit wärmehärtbarem Bindemittel versetzten, lignozellulose- und/oder zellulosehaltigen Teilchen, bei dem zunächst auf einer Unterlage ein Vlies gebildet, dieses Vlies durch Druck und Wärme in Plattenform gebracht und dann durch einen weiteren unter Druck und Wärme vor sich gehenden Preßvorgang in die stabile Endform überführt wird, dadurch **gekennzeichnet,** daß als lignozellulose- und/oder zellulosehaltige Teilchen zumindest überwiegend zerfaserte Teilchen, die auch kurz und wollig sein können, verwendet werden, daß das Vlies durch Anwendung von Druck und Wärme kontinuierlich und/oder diskontinuierlich in eine in sich mechanisch stabile Plattenform gebracht wird, und daß die bereits mechanisch stabile und zumindest im we sentlichen ausgehärtete Platte kontinuierlich und/oder diskontinuierlich in einem weiteren beheizten Preßvorgang unter Anwendung eines vergleichsweise wesentlich höheren Druckes in die gewünschte, insbesondere dreidimensionale Endform verpreßt wird.

2. Verfahren nach Anspruch 1, dadurch **gekennzeichnet,** daß die nach dem ersten Preßvorgang erhaltene, mechanisch stabile Faserplatte mit einer Rohdichte größer 600 kg/m$^3$, vorzugsweise im Bereich von 600 bis 650 kg/m$^3$ gefertigt wird.

3. Verfahren nach Anspruch 1 oder 2, dadurch **gekennzeichnet,** daß Vliese zur Herstellung von verhältnismäßig dünnen Platten gebildet werden.

4. Verfahren nach Anspruch 3, dadurch **gekennzeichnet,** daß der bei der Endverformung angewandte Preßdruck in der Regel im Bereich von 3 bis 10 N/mm$^2$ gelegen ist.

5. Verfahren nach einem der vorhergehenden Ansprüche, dadurch **gekennzeichnet,** daß die Temperatur bei dem zur Endverformung führenden Preßvorgang meist im Bereich von 170 ° C bis 190 ° C gewählt wird.

6. Verfahren nach einem der vorhergehenden Ansprüche,

dadurch **gekennzeichnet,**

daß die mechanisch stabile Faserplatte vor der Endverformung während einer vorgebbaren Zeitspanne vorerwärmt wird, insbesondere drucklos vorerwärmt wird.

7. Verfahren nach Anspruch 6,

dadurch **gekennzeichnet,**

daß die Dauer der Vorerwärmung der Faserplatte bevorzugt etwa gleich der Preßzeit während der Endverformung ist.

8. Verfahren nach einem der vorhergehenden Ansprüche,

dadurch **gekennzeichnet,**

daß während des zur Endverformung dienenden Preßvorgangs der Preßdruck zunächst kurzfristig auf einen Maximalwert erhöht und dann auf einen deutlich niedrigeren Druck abgesenkt wird.

9. Verfahren nach Anspruch 8,

dadurch **gekennzeichnet,**

daß der kurzzeitig angelegte hohe spezifische Preßdruck etwa 100 bar und der dann verringerte spezifische Preßdruck etwa 60 bis 70 bar beträgt.

10. Verfahren nach einem der vorhergehenden Ansprüche,

dadurch **gekennzeichnet,**

daß als Bindemittel für insbesondere verhältnismäßig dünne und handelsübliche Faserplatten ein Harnstoff-, Phenol- oder dergleichen Harz verwendet und der jeweilige Festharzanteil im Bereich von beispielsweise ca. 9 bis ca. 15 Gew.-% der Ausgangsmaterialien gewählt wird.

11. Verfahren nach einem oder mehreren der vorhergehenden Ansprüche,

dadurch **gekennzeichnet,**

daß das Vlies ein- oder beidseitig mit wenigstens einer Beschichtungsbahn während seiner Bildung versehen wird oder daß die aus dem Vlies durch Druck und Wärme geformte Platte vor dem weiteren unter Druck und Wärme vor sich gehenden Preßvorgang ein- oder beidseitig mit we nigstens einer Beschichtungsbahn beschichtet wird.

12. Verfahren nach Anspruch 11,

dadurch **gekennzeichnet,**

daß die Beschichtungsbahn(en) vorzugsweise aus einer Kunststoffolie, einer Papierbahn, insbesondere aus einer dekorativen kunstharzimprägnierten Papierbahn besteht bzw. bestehen.

13. Verfahren nach Anspruch 11 und / oder 12,

dadurch **gekennzeichnet,**

daß wenigstens eine zumindest im wesentlichen wasserdampfundurchlässige oder wasserdampfdurchlässige Beschichtunsbahn verwendet wird.